**Europäisches Patentamt**

**European Patent Office**

**Office européen des brevets**

(11) Veröffentlichungsnummer: **0 416 197 A1**

# (12) EUROPÄISCHE PATENTANMELDUNG

(21) Anmeldenummer: **90104484.2**

(22) Anmeldetag: **09.03.90**

(51) Int. Cl.5: **F02D 41/14**, F02D 41/24,
G01N 27/416

(30) Priorität: **31.08.89 DE 3928860**

(43) Veröffentlichungstag der Anmeldung:
**13.03.91 Patentblatt 91/11**

(84) Benannte Vertragsstaaten:
**DE FR GB**

(71) Anmelder: **VDO Adolf Schindling AG**
**Gräfstrasse 103**
**W-6000 Frankfurt/Main 90(DE)**

(72) Erfinder: **Feldinger, Martin, Prof.-Dr.**

**Scharderhohlweg 7**
**W-6240 Königstein(DE)**
Erfinder: **März, Uwe**
**Sachsenhausenerstrasse 13**
**W-6231 Schwalbach a.T.(DE)**
Erfinder: **Tambosi, Joachim**
**Friedrich-Ebert-Strasse 21**
**W-6231 Schwalbach/Ts.(DE)**

(74) Vertreter: **Klein, Thomas, Dipl.-Ing. (FH)**
**Sodener Strasse 9 Postfach 6140**
**W-6231 Schwalbach a. Ts.(DE)**

(54) **Verfahren und Vorrichtung zur Verbesserung des Abgasverhaltens von gemischverdichtenden Brennkraftmaschinen.**

㊌ Es wird ein Verfahren zur Verbesserung des Abgasverhaltens von gemischverdichtenden Brennkraftmaschinen angegeben. Dabei wird das Ausgangssignal (21) einer im Abgaskanal der Brennkraftmaschine angeordneten Sauerstoffmeßsonde im interessierenden Spannungsbereich in eine Anzahl von Abschnitten unterteilt und in einem Speicher (24) zu jedem Abschnitt ein korrigierter Spannungswert abgelegt.

Fig. 2

# VERFAHREN UND VORRICHTUNG ZUR VERBESSERUNG DES ABGASVERHALTENS VON GEMISCHVERDICHTENDEN BRENNKRAFTMASCHINEN

Die Erfindung betrifft ein Verfahren zur Verbesserung des Abgasverhaltens von gemischverdichtenden Brennkraftmaschinen nach der Gattung des Hauptanspruchs.

Die Erfindung betrifft weiter eine Vorrichtung zur Durchführung des Verfahrens gemäß Anspruch 5.

In der Technik der Gemischaufbereitung für gemischverdichtende Brennkraftmaschinen ist es seit langerem bekannt, zur Erzielung eines möglichst geringen Ausstoßes an schädlichen Abgasen die Gemischzusammensetzung in Abhängigkeit vom Ausgangssignal einer im Abgasstrom angeordneten Sauerstoffmeßsonde zu regeln. Dabei wird das Ausgangssignal der Sauerstoffmeßsonde einem Regler zugeführt und die Ausgangsspannung des Reglers bildet eine Stellgröße zur Regelung des Kraftstoff-Luft-Verhältnisses.

Mit der Regelung des Kraftstoff-Luft-Verhältnisses bei Brennkraftmaschinen wird in erster Linie eine Verminderung schädlicher Anteile der Abgasemissionen von Brennkraftma schinen angestrebt. Es ist dazu beispielsweise ein Verfahren mit einer im Abgasstrom der Brennkraftmaschine angeordneten Sauerstoffmeßsonde bekannt, die eine Integriereinrichtung ansteuert, wobei das Ausgangssignal der Abgasmeßsonde an einen Schwellwertschalter gelegt wird und diesen bei Erreichen des Schwellwertes umschaltet und wobei mit dem Umschalten des Schwellwertschalters die Integrationsrichtung der Integriereinrichtung geändert wird. In Abhängigkeit von wenigstens einem Betriebsparameter der Brennkraftmaschine, insbesondere in Abhängigkeit von der Ansaugluftmenge der Brennkraftmaschine, wird die Zeitkonstante der Integriereinrichtung geändert. Die im Zusammenhang mit dem bekannten Verfahren vorgeschlagene Integriereinrichtung mit veränderbarer Zeitkonstante genügt jedoch nicht allen Anforderungen bezüglich einer genauen und anpassungsfähigen Regelung. Insbesondere folgt bei dem bekannten Verfahren die Stellgröße nicht genügend schnell plötzlichen Laständerungen.

Das Spannungssignal einer Sauerstoffmeßsonde weist typisch im Bereich von Lambda = 1 einen steilen Verlauf auf, der unmittelbar angrenzend an diesen Bereich jeweils in einen flachen Ast übergeht. Das Spannungssignal der Sauerstoffmeßsonde beeinflußt die Einrichtung zur Gemischzusammensetzung in der Weise, daß bei einem Sondensignal, das einer Lambdazahl kleiner 1 entspricht, das Gemisch abgemagert und bei einer Sondenzahl größer 1 das Gemisch angefettet wird. Infolge des steilen Verlaufs der Rennlinie durchläuft die Regelung im quasistationären Zustand ständig den Bereich der Kennlinie zwischen den beiden Knickpunkten. Im Mittel ist die Gemischzusammensetzung so, daß sie dem stöchiometrischen Wert entspricht und das Abgas durch eine katalytische Abgasreinigungseinrichtung weitgehend von unerwünschten und schädlichen Anteilen befreit werden kann.

Bei einer plötzlichen Laständerung, wie sie im normalen Fahrbetrieb eines Kraftfahrzeugs ständig auftritt, kann der Wert der Luftzahl Lambda, hauptsächlich infolge von Kondensationsvorgängen im Ansaugbereich der Brennkraftmaschine, erheblich von dem angestrebten Wert 1 abweichen. Infolge des flachen Kennlinienverlaufs des Spannungswertes der Sauerstoffmeßsonde bei Lambdawerten oberhalb bzw. unterhalb des Wertes 1 ergibt sich jedoch nur ein verhältnismäßig kleines Störsignal, so daß die Regeleinrichtung die tatsächliche Abweichung des Lambdawertes vom Sollzustand nur unzureichend erkennt. Infolgedessen dauert die Rückführung der Regelung auf den Wert 1 unerwünscht lange und die Abgase enthalten während dieser Zeit einen hohen Schadstoffanteil. Außerdem bewirkt das ständige Schwanken der Luftzahl um den Wert 1 in verhältnismäßig weiten Grenzen eine periodische Änderung der Abgaszusammensetzung, die dadurch ausgeglichen werden muß, daß sowohl die Abgasmeßsonde als auch die katalytische Nachbehandlungseinrichtung zur Abgasreinigung in einem Mindestabstand vom Ausgang der Brennkraftmaschine angeordnet sein müssen.

Es ist bereits ein Verfahren bekannt, bei dem der Regelung des Kraftstoff-Luft-Verhältnisses eine Steuerung nach einem gespeicherten exemplartypischen Kennfeld überlagert wird. Dieses Verfahren beseitigt jedoch nicht die mit dem nichtlinearen Verlauf der Kennlinie der Sauerstoff-Meßsonde verbundenen Schwierigkeiten. Außerdem wird erheblicher Speicheraufwand im elektronischen Steuergerät benötigt.

Der Erfindung liegt daher die Aufgabe zugrunde, ein Verfahren zur Verbesserung des Abgasverhaltens gemischverdichtender Brennkraftmaschinen anzugeben, die beim quasistationären Betrieb eine stabile Regelung der Luftüberschußzahl Lambda auf den Wert 1 zuläßt. Weiter soll die angegebene Kraftstoff-Luft-Gemischbildungseinrichtung in der Lage sein, Störungen der Gemischzusammensetzung durch Änderungen der Betriebsbedingungen der Brennkraftmaschine rasch auszuregeln, so daß die Zeitspanne, in der die Gemischbildungseinrichtung Abgase mit hohem Schadstoffanteil zuläßt, kürzer ist als bei Einrichtungen nach dem Stand der Technik.

Die Lösung dieser Aufgabe erfolgt für das Verfahren mit den im kennzeichnenden Teil des Anspruchs 1 angegebenen Maßnahmen, für die Vorrichtung mit den Maßnahmen des Anspruchs 5. Dabei ist vorteilhaft, daß die Regelstabilität der Gemischbildungsvorrichtung insgesamt besser wird. Weiter ist vorteilhaft, daß Störungen durch Änderungen der Betriebsparameter der Brennkraftmaschine schneller ausgeregelt werden und außerdem dabei die kurzzeitigen Regelabweichungen geringer sind als bei bekannten Einrichtungen.

Das erfindungsgemäße Verfahren ist für verschiedene Kraftstoffeinspritzsysteme geeignet, wie beispielsweise kontinuierlich oder intermittierend einspritzende Systeme mit zentraler oder zylinderweisen Einspritzung. Dementsprechend kann die vom Regler abgegebene Stellgröße den Druck oder die Einspritzdauer des Kraftstoffes im Einspritzsystem steuern.

Vorteilhafte Weiterbildungen und Ausgestaltungen des angegebenen Verfahrens ergeben sich aus den Unteransprüchen. Ein Ausführungsbeispiel der Erfindung ist in der Zeichnung dargestellt und in der nachfolgenden Beschreibung näher erläutert. Es zeigen Figur 1 ein Spannungs-Luftzahl-Diagramm einer Sauerstoffmeßsonde, Figur 2 das Prinzipschaltbild zur Veränderung der Kennlinie einer Sauerstoff meßsonde, soweit dies für die Erfindung wesentlich ist, Figur 3 ein Zahlenbeispiel einer Veränderung dieser Kennlinie in Tabellenform, Figur 4 beispielhaft ein korrigiertes Spannungs-Luftzahl-Diagramm einer Sauerstoffmeßsonde, Figur 5 die Sprungantwort einer bekannten Kraftstoff-Luft-Gemischbildungsvorrichtung, Figur 6 die Sprungantwort der erfindungsgemäßen Kraftstoff-Luft-Gemischbildungsvorrichtung, jeweils auf die gleiche Laständerung der Brennkraftmaschine.

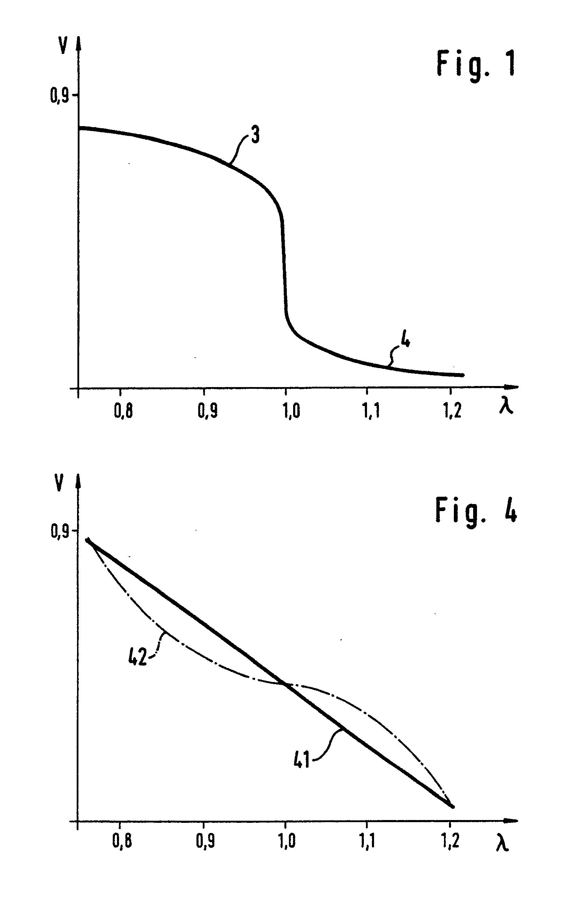

In der Figur 1 ist in einem Diagramm das Ausgangssignal einer Sauerstoffmeßsonde dargestellt, wie sie im Abgaskanal einer Brennkraftmaschine zur Erkennung der Abgaszusammensetzung angeordnet ist. Die Sauerstoffmeßsonde ist typischerweise eine Zirkoniumoxidsonde, deren Ausgangssignal sich zwischen wenigen Millivolt bei einer Luftzahl Lambda deutlich größer als 1 und ca. 900 Millivolt bei einer Luftzahl deutlich kleiner als 1. Dabei ergibt sich ein flacher Verlauf der Kennlinie in den Bereichen oberhalb und unterhalb des stöchiometrischen Wertes 1, während in einem sehr engen Bereich um Lambda = 1 die Spannung sich um mehrere Hundert Millivolt ändert. Da es für das ordnungsgemäße Arbeiten einer katalytischen Abgasnachbehandlungseinrichtung notwendig ist, den Wert der Luftzahl nahe bei 1 zu halten, entstehen bei nur geringen Änderungen des Wertes der Luftzahl Lambda relativ große Schwankungen der Sondenspannung. Infolgedessen ist keine stetige Regelung erzielbar, sondern es entwickelt sich eine Art Zweipunktregelung, wobei der Lambdawert in schneller Folge um den Wert 1 herum pendelt, so daß die Abgaszusammensetzung im Mittel den Anforderungen entspricht. Dabei kann die Regelsteilheit nicht beliebig groß gemacht werden, weil sonst das System instabil wird, so daß andererseits im Falle von Lastwechseln die Ausregelung nur langsam erfolgt und das Kraft stoff-Luft-Gemisch vorübergehend vom stöchiometrischen Wert abweicht. Dadurch erfolgt die katalytische Nachbehandlung unvollständig und es erhöht sich unerwünscht der Anteil schädlicher Bestandteile im Abgas. Diese zögernde Ausregelung wird noch durch den flachen Verlauf der beiden Kennlinienäste 3 und 4 bewirkt, da auch bei erheblichen Abweichungen vom erwünschten Wert 1 der Luftzahl Lambda die Ausgangsspannung der Sonde sich nur wenig ändert, so daß die Erkennung großer Abweichungen Schwierigkeiten bereitet.

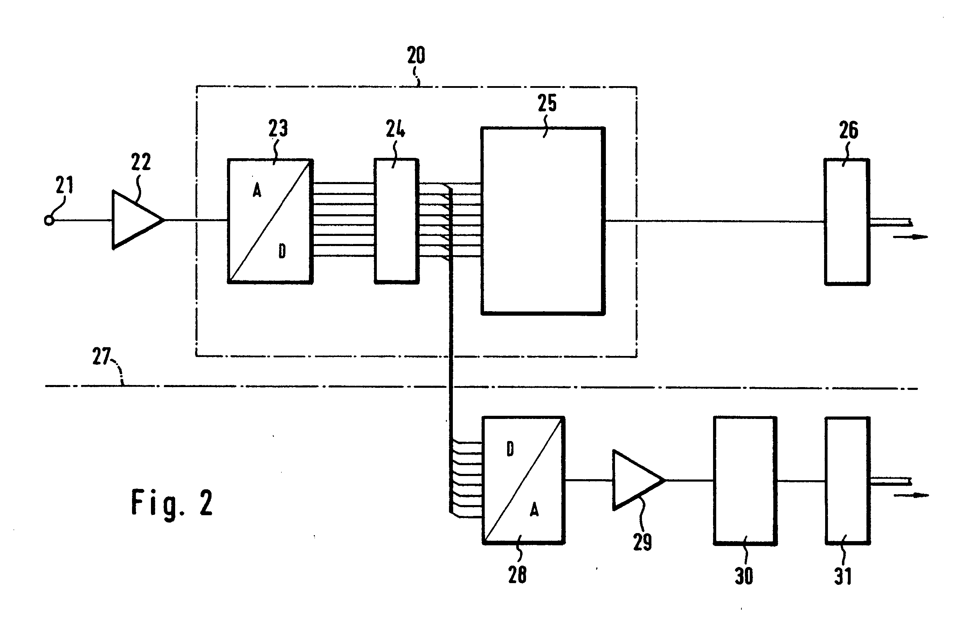

In Figur 2 ist mit 21 der Ausgang der Sauerstoffmeßsonde bezeichnet. Das dort anstehende Signal wird in einem Eingangsverstärker 22 verstärkt und einem A/D-Wandler 23 zur Umwandlung des analogen Signalwertes in digitale Daten umgewandelt. Diese werden parallel einer Speichereinrichtung 24 zugeführt, in der in einem Festspeicher Korrekturwerte abgespeichert sind, welche die Kennlinie der Sauerstoffmeßsonde in einer gewünschten Weise abändern. Beispielsweise kann es erwünscht sein, die Kennlinie zu linearisieren, um einen proportionalen Zusammenhang zwischen der Luftzahl Lambda und der Signalspannung zu erzielen. Es ist aber auch durch einfache Änderung der Korrekturwerte möglich, der Kennlinie ausgehend von dem Wert Lambda = 1 einen progressiven Verlauf vorzugeben, um die Regelgüte insgesamt zu verbessern. Dies deswegen, weil bei zunehmender Abweichung der Luftzahl Lambda vom Sollwert eine erheblich stärkere Zunahme des Proportionalanteils der Rückführung erfolgt, der nach dem Ausregeln der Störung selbsttätig wieder zurückgeht. Dadurch erhöht sich generell die Regelstabilität. Das in der Einrichtung 24 aufbereitete Sondensignal gelangt dann zur Weiterverarbeitung in eine digitale Regeleinrichtung 25, von der aus es in geeigneter Form an ein Stellglied 26 weitergegeben wird, das die Gemischzusammensetzung der Brennkraftmaschine regelnd beeinfußt. Die elektrischen Baugruppen 23, 24, 25 können auch in einer elektrischen Baugruppe 20 zusammengefaßt sein.

Unterhalb der strichpunktierten Linie 27 in Figur 2 ist alternativ die analoge Signalverarbeitung des in der Einrichtung 24 entzerrten Sondensignals dargestellt. Dies wird zunächst einem DA-Wandler 28 zur Rückwandlung der digitalen Signale in ein analoges Ausgangssignal zugeleitet und dieses in einem weiteren Verstärker 29 auf ein Spannungsniveau angehoben, das der nachfolgende Regler 30 verarbeiten kann. Der Regler 30 beeinflußt wiederum ein Stellglied 31, das in der gleichen Weise wie in der oberen Hälfte der Figur 2 dargestellt, die Gemischzusammensetzung der Brennkraftmaschine derart beeinflußt, daß die Luftzahl Lambda möglichst nahe an dem Wert 1 gehalten wird.

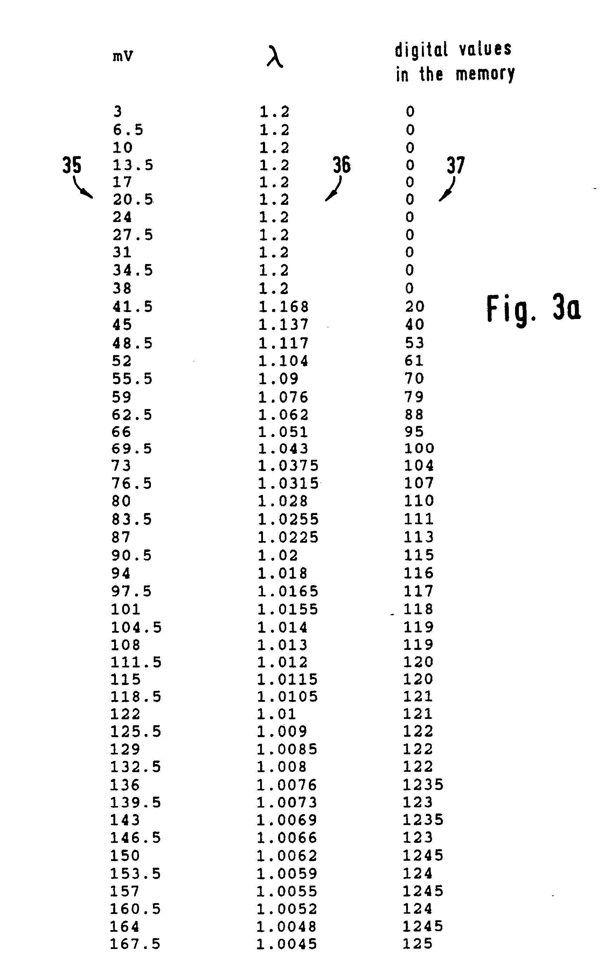

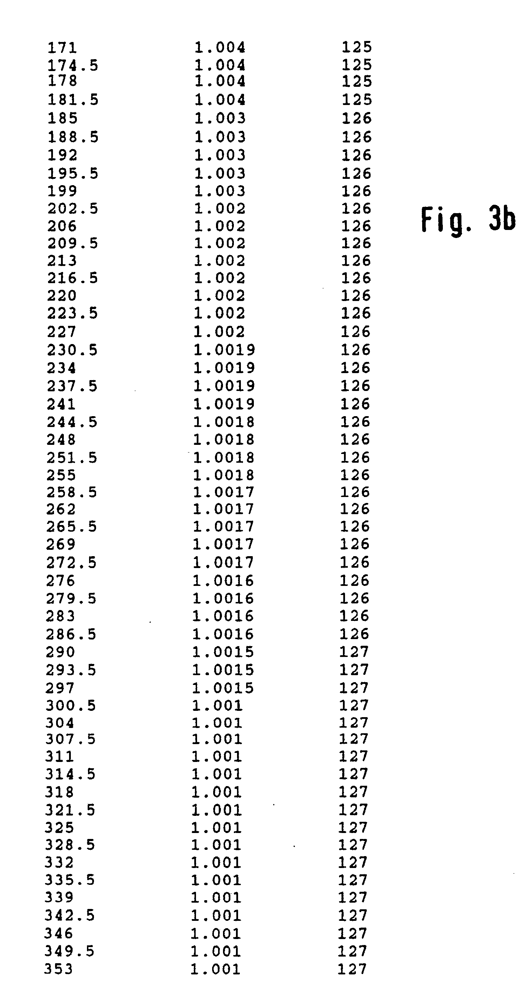

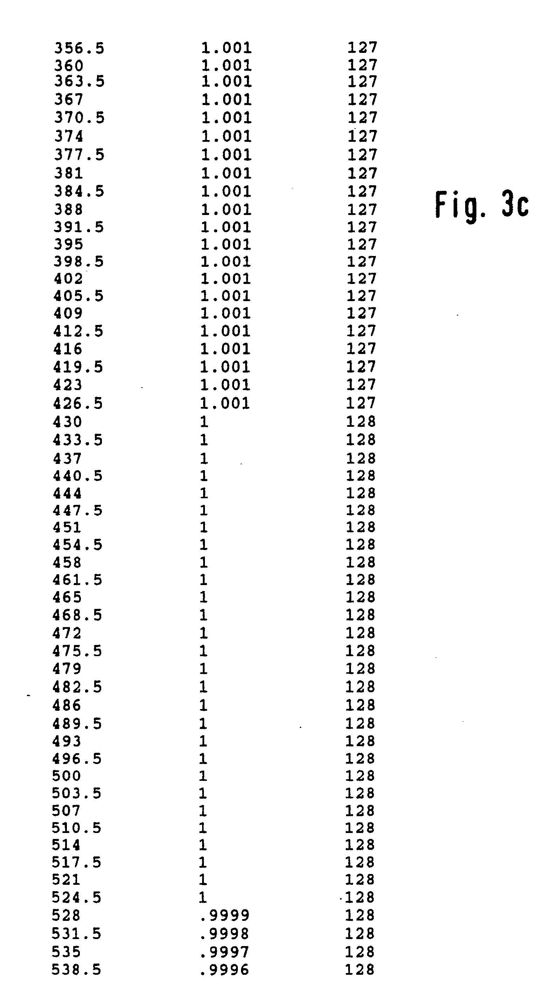

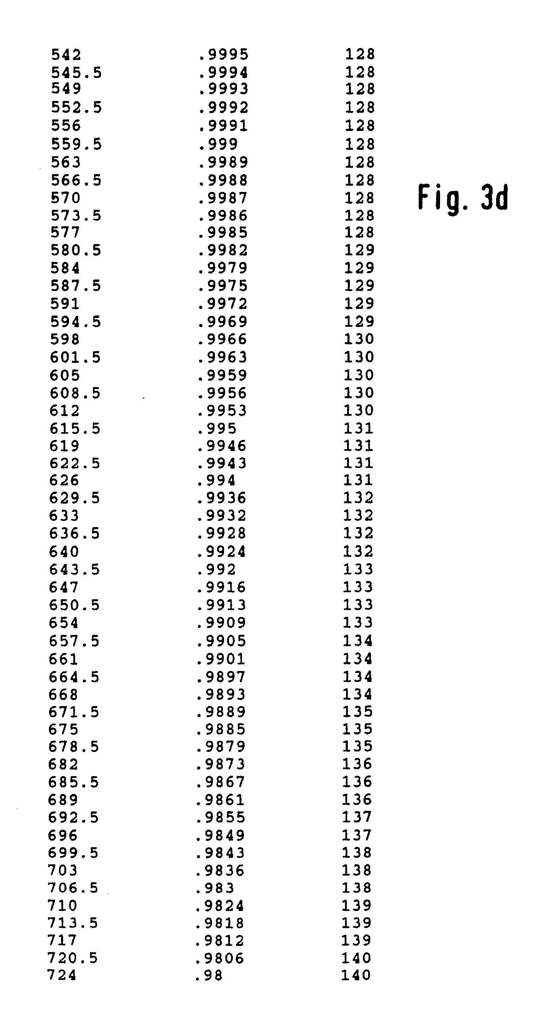

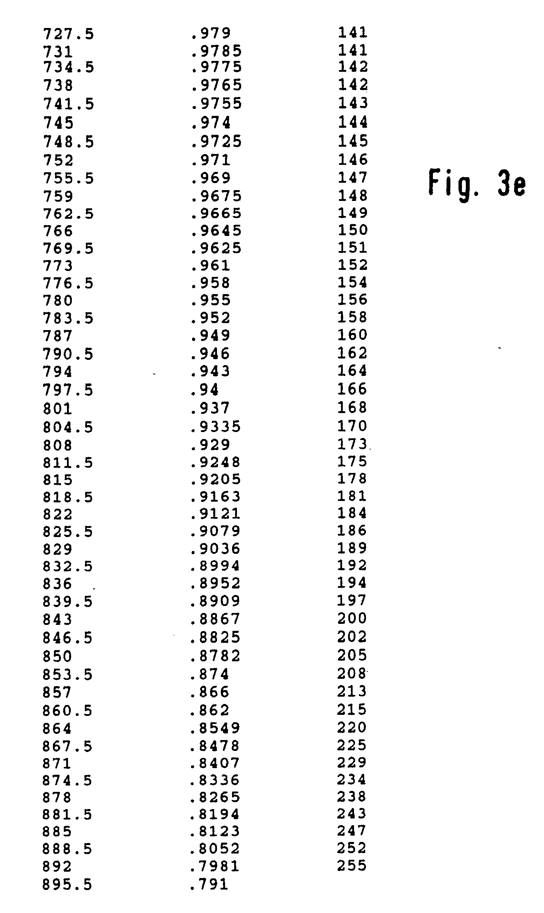

In Figur 3 ist tabellarisch dargestellt, wie für den Fall, daß die Sondenspannung in einen im wesentlichen linearen Zusammenhang zum Wert der gemessenen Luftzahl Lambda gebracht werden soll, abgespeicherte Werte aussehen. Dabei gibt die jeweils erste Zahlenkolonne die Sondenspannung wieder, die bei dem Lambdawert generiert wird, der in der jeweils zweiten Kolonne waagrecht daneben ausgedruckt ist. Die Zahlenkolonnen 36 und 37 zeigen gegenübergestellt den erwünschten linearen Zusammenhang zwischen dem aufbereiteten Sondensignal, und der Luftzahl Lambda. Die Zahlenkolonne 35 zeigt die zugehörige Spannung der Sauerstoffmeßsonde.

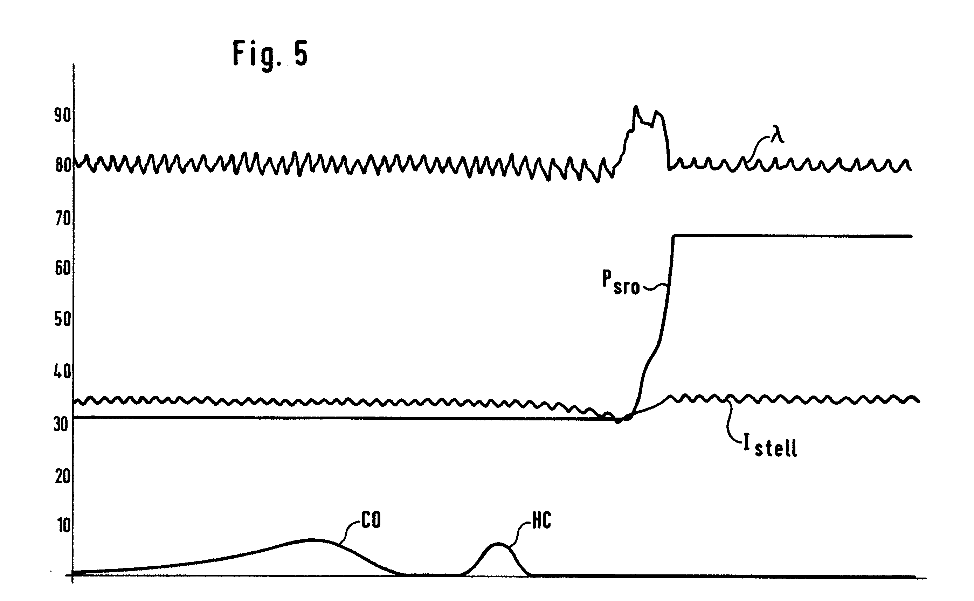

In Figur 4 sind beispielhaft zwei Möglichkeiten dargestellt, wie das Ausgangssignal der Sauerstoffmeßsonde vorteilhaft abgeändert werden kann. Dabei stellt die Kurve 41 einen linearen Zusammenhang zwischen der Größe der Luftzahl Lambda und dem Spannungswert dar, während die Kurve 42 von der Luftzahl 1 ausgehend nach beiden Seiten einen progressiven Verlauf aufweist.

In Figur 5 ist dargestellt, wie die Luftzahl Lambda auf einen Lastwechsel der Brennkraftmaschine reagiert. Der Lastwechsel ist durch die Änderung des Saugrohrdrucks P sro charakterisiert. Infolge der einleitend beschriebenen Zusammenhänge wird die Abweichung der Luftzahl Lambda vom Wert 1 nur zögernd ausgeregelt. Entsprechend gestaltet sich der Einschwingvorgang für den Strom am Stellglied (I stell) zeitlich lang andauernd. Am unteren Rand der Figur 5 sind die Schadstoffanteile im Abgas als Kurvenzüge dargestellt. Sowohl der Anteil an unverbrannten Kohlenwasserstoffen HC als auch an Kohlenmonoxid CO weicht für längere Zeit von dem erwünschten Wert Null ab.

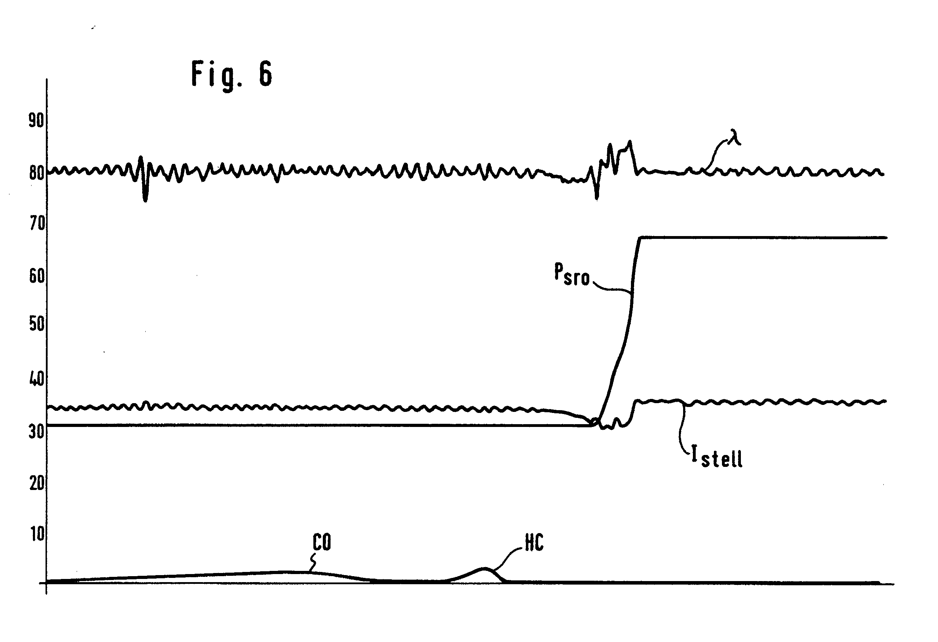

Demgegenüber ist in Figur 6, die die Aufzeichnung für das erfindungsgemäße Verfahren unter Verwendung der erfindungsgemäßen Vorrichtung darstellt, die Abweichung von Lambda bei einer gleichartigen Änderung des Saugrohrdrucks P sro erheblich geringer als bei der bekannten Anordnung entsprechend Figur 5a. Ebenso ist die Einschwingzeit für den Stellstrom I stell wesentlich kürzer, die Abweichungen der Kurven für die Schadstoffe HC und CO im Abgas geringer.

**Ansprüche**

1. Verfahren zur Verbesserung des Abgasverhaltens von gemischverdichtenden Brennkraftmaschinen, wobei das Ausgangssignal einer im Abgaskanal der Brennkraftmaschine angeordneten Sauerstoff-Meßsonde einem Regler zugeführt wird, dessen Ausgangsspannung eine Stellgröße zur Regelung des Kraftstoff-Luft-Verhältnisses darstellt, dadurch gekennzeichnet, daß der Spannungsbereich des Ausgangssignal der Sauerstoffmeßsonde in eine festgelegte Anzahl von Einzelschritten unterteilt wird, daß in einem Speicher zu jedem Einzelschritt ein korrigierter Spannungswert abgelegt wird und daß die korrigierten Spannungswerte der weiteren Signalverarbeitung zugrunde gelegt werden.

2. Verfahren nach Anspruch 1, dadurch gekennzeichnet, daß das analoge Ausgangssignal der Sauerstoffmeßsonde mittels einer Analog-Digital-Wandlung in ein Digitalsignal überführt wird, daß in einem Festwertspeicher eine Korrekturtabelle für jeden erfaßbaren Wert des Sondenausgangssignals abgelegt wird, und daß das korrigierte Signal vom Ausgang des Festwertspeichers zur Gasmischregelung verwendet wird.

3. Verfahren nach Anspruch 1 oder 2, dadurch gekennzeichnet, daß die korrigierten Spannungswerte, bezogen auf die tatsächliche Luftzahl Lambda, einen wählbaren Verlauf der Kennlinie ergeben.

4. Verfahren nach einem der Ansprüche 1 bis 3, dadurch gekennzeichnet, daß die korrigierten Spannungswerte, bezogen auf die tatsächliche Luftzahl Lambda, einen linearen Kennlinienverlauf ergeben.

5. Verfahren nach einem der Ansprüche 1 bis 3, dadurch gekennzeichnet, daß die korrigierten Spannungswerte, bezogen auf die tatsächliche Luftzahl Lambda, beidseitig von der Luftzahl Lambda = 1 einen progressiven Verlauf der Kennlinie ergeben.

6. Vorrichtung zur Durchführung des Verfahrens nach einem der Ansprüche 1 - 5, gekennzeichnet durch einen Festwertspeicher, dessen Eingang das analog-digital-gewandelte Ausgangssignal der Sauerstoffmeßsonde zugeführt ist und das durch eine im Festwertspeicher abgelegte Korrekturtabelle eine Änderung erfährt und an dessen Ausgang das geänderte Sondensignal ansteht, das dem Eingang eines Reglers zur Regelung der Kraftstoff-Luft-Gemisch-Zusammensetzung, gegebenenfalls nach Digital-Analog-Wandlung, zugeführt ist.

Fig. 1

Fig. 4

Fig. 2

EP 0 416 197 A1

| mV | λ | digital values in the memory |
|---|---|---|
| 3 | 1.2 | 0 |
| 6.5 | 1.2 | 0 |
| 10 | 1.2 | 0 |
| 13.5 | 1.2 | 0 |
| 17 | 1.2 | 0 |
| 20.5 | 1.2 | 0 |
| 24 | 1.2 | 0 |
| 27.5 | 1.2 | 0 |
| 31 | 1.2 | 0 |
| 34.5 | 1.2 | 0 |
| 38 | 1.2 | 0 |
| 41.5 | 1.168 | 20 |
| 45 | 1.137 | 40 |
| 48.5 | 1.117 | 53 |
| 52 | 1.104 | 61 |
| 55.5 | 1.09 | 70 |
| 59 | 1.076 | 79 |
| 62.5 | 1.062 | 88 |
| 66 | 1.051 | 95 |
| 69.5 | 1.043 | 100 |
| 73 | 1.0375 | 104 |
| 76.5 | 1.0315 | 107 |
| 80 | 1.028 | 110 |
| 83.5 | 1.0255 | 111 |
| 87 | 1.0225 | 113 |
| 90.5 | 1.02 | 115 |
| 94 | 1.018 | 116 |
| 97.5 | 1.0165 | 117 |
| 101 | 1.0155 | 118 |
| 104.5 | 1.014 | 119 |
| 108 | 1.013 | 119 |
| 111.5 | 1.012 | 120 |
| 115 | 1.0115 | 120 |
| 118.5 | 1.0105 | 121 |
| 122 | 1.01 | 121 |
| 125.5 | 1.009 | 122 |
| 129 | 1.0085 | 122 |
| 132.5 | 1.008 | 122 |
| 136 | 1.0076 | 1235 |
| 139.5 | 1.0073 | 123 |
| 143 | 1.0069 | 1235 |
| 146.5 | 1.0066 | 123 |
| 150 | 1.0062 | 1245 |
| 153.5 | 1.0059 | 124 |
| 157 | 1.0055 | 1245 |
| 160.5 | 1.0052 | 124 |
| 164 | 1.0048 | 1245 |
| 167.5 | 1.0045 | 125 |

35   36   37

Fig. 3a

| | | |
|---|---|---|
| 171 | 1.004 | 125 |
| 174.5 | 1.004 | 125 |
| 178 | 1.004 | 125 |
| 181.5 | 1.004 | 125 |
| 185 | 1.003 | 126 |
| 188.5 | 1.003 | 126 |
| 192 | 1.003 | 126 |
| 195.5 | 1.003 | 126 |
| 199 | 1.003 | 126 |
| 202.5 | 1.002 | 126 |
| 206 | 1.002 | 126 |
| 209.5 | 1.002 | 126 |
| 213 | 1.002 | 126 |
| 216.5 | 1.002 | 126 |
| 220 | 1.002 | 126 |
| 223.5 | 1.002 | 126 |
| 227 | 1.002 | 126 |
| 230.5 | 1.0019 | 126 |
| 234 | 1.0019 | 126 |
| 237.5 | 1.0019 | 126 |
| 241 | 1.0019 | 126 |
| 244.5 | 1.0018 | 126 |
| 248 | 1.0018 | 126 |
| 251.5 | 1.0018 | 126 |
| 255 | 1.0018 | 126 |
| 258.5 | 1.0017 | 126 |
| 262 | 1.0017 | 126 |
| 265.5 | 1.0017 | 126 |
| 269 | 1.0017 | 126 |
| 272.5 | 1.0017 | 126 |
| 276 | 1.0016 | 126 |
| 279.5 | 1.0016 | 126 |
| 283 | 1.0016 | 126 |
| 286.5 | 1.0016 | 126 |
| 290 | 1.0015 | 127 |
| 293.5 | 1.0015 | 127 |
| 297 | 1.0015 | 127 |
| 300.5 | 1.001 | 127 |
| 304 | 1.001 | 127 |
| 307.5 | 1.001 | 127 |
| 311 | 1.001 | 127 |
| 314.5 | 1.001 | 127 |
| 318 | 1.001 | 127 |
| 321.5 | 1.001 | 127 |
| 325 | 1.001 | 127 |
| 328.5 | 1.001 | 127 |
| 332 | 1.001 | 127 |
| 335.5 | 1.001 | 127 |
| 339 | 1.001 | 127 |
| 342.5 | 1.001 | 127 |
| 346 | 1.001 | 127 |
| 349.5 | 1.001 | 127 |
| 353 | 1.001 | 127 |

Fig. 3b

| | | |
|---|---|---|
| 356.5 | 1.001 | 127 |
| 360 | 1.001 | 127 |
| 363.5 | 1.001 | 127 |
| 367 | 1.001 | 127 |
| 370.5 | 1.001 | 127 |
| 374 | 1.001 | 127 |
| 377.5 | 1.001 | 127 |
| 381 | 1.001 | 127 |
| 384.5 | 1.001 | 127 |
| 388 | 1.001 | 127 |
| 391.5 | 1.001 | 127 |
| 395 | 1.001 | 127 |
| 398.5 | 1.001 | 127 |
| 402 | 1.001 | 127 |
| 405.5 | 1.001 | 127 |
| 409 | 1.001 | 127 |
| 412.5 | 1.001 | 127 |
| 416 | 1.001 | 127 |
| 419.5 | 1.001 | 127 |
| 423 | 1.001 | 127 |
| 426.5 | 1.001 | 127 |
| 430 | 1 | 128 |
| 433.5 | 1 | 128 |
| 437 | 1 | 128 |
| 440.5 | 1 | 128 |
| 444 | 1 | 128 |
| 447.5 | 1 | 128 |
| 451 | 1 | 128 |
| 454.5 | 1 | 128 |
| 458 | 1 | 128 |
| 461.5 | 1 | 128 |
| 465 | 1 | 128 |
| 468.5 | 1 | 128 |
| 472 | 1 | 128 |
| 475.5 | 1 | 128 |
| 479 | 1 | 128 |
| 482.5 | 1 | 128 |
| 486 | 1 | 128 |
| 489.5 | 1 | 128 |
| 493 | 1 | 128 |
| 496.5 | 1 | 128 |
| 500 | 1 | 128 |
| 503.5 | 1 | 128 |
| 507 | 1 | 128 |
| 510.5 | 1 | 128 |
| 514 | 1 | 128 |
| 517.5 | 1 | 128 |
| 521 | 1 | 128 |
| 524.5 | 1 | 128 |
| 528 | .9999 | 128 |
| 531.5 | .9998 | 128 |
| 535 | .9997 | 128 |
| 538.5 | .9996 | 128 |

Fig. 3c

| | | |
|---|---|---|
| 542 | .9995 | 128 |
| 545.5 | .9994 | 128 |
| 549 | .9993 | 128 |
| 552.5 | .9992 | 128 |
| 556 | .9991 | 128 |
| 559.5 | .999 | 128 |
| 563 | .9989 | 128 |
| 566.5 | .9988 | 128 |
| 570 | .9987 | 128 |
| 573.5 | .9986 | 128 |
| 577 | .9985 | 128 |
| 580.5 | .9982 | 129 |
| 584 | .9979 | 129 |
| 587.5 | .9975 | 129 |
| 591 | .9972 | 129 |
| 594.5 | .9969 | 129 |
| 598 | .9966 | 130 |
| 601.5 | .9963 | 130 |
| 605 | .9959 | 130 |
| 608.5 | .9956 | 130 |
| 612 | .9953 | 130 |
| 615.5 | .995 | 131 |
| 619 | .9946 | 131 |
| 622.5 | .9943 | 131 |
| 626 | .994 | 131 |
| 629.5 | .9936 | 132 |
| 633 | .9932 | 132 |
| 636.5 | .9928 | 132 |
| 640 | .9924 | 132 |
| 643.5 | .992 | 133 |
| 647 | .9916 | 133 |
| 650.5 | .9913 | 133 |
| 654 | .9909 | 133 |
| 657.5 | .9905 | 134 |
| 661 | .9901 | 134 |
| 664.5 | .9897 | 134 |
| 668 | .9893 | 134 |
| 671.5 | .9889 | 135 |
| 675 | .9885 | 135 |
| 678.5 | .9879 | 135 |
| 682 | .9873 | 136 |
| 685.5 | .9867 | 136 |
| 689 | .9861 | 136 |
| 692.5 | .9855 | 137 |
| 696 | .9849 | 137 |
| 699.5 | .9843 | 138 |
| 703 | .9836 | 138 |
| 706.5 | .983 | 138 |
| 710 | .9824 | 139 |
| 713.5 | .9818 | 139 |
| 717 | .9812 | 139 |
| 720.5 | .9806 | 140 |
| 724 | .98 | 140 |

# Fig. 3d

| | | |
|---|---|---|
| 727.5 | .979 | 141 |
| 731 | .9785 | 141 |
| 734.5 | .9775 | 142 |
| 738 | .9765 | 142 |
| 741.5 | .9755 | 143 |
| 745 | .974 | 144 |
| 748.5 | .9725 | 145 |
| 752 | .971 | 146 |
| 755.5 | .969 | 147 |
| 759 | .9675 | 148 |
| 762.5 | .9665 | 149 |
| 766 | .9645 | 150 |
| 769.5 | .9625 | 151 |
| 773 | .961 | 152 |
| 776.5 | .958 | 154 |
| 780 | .955 | 156 |
| 783.5 | .952 | 158 |
| 787 | .949 | 160 |
| 790.5 | .946 | 162 |
| 794 | .943 | 164 |
| 797.5 | .94 | 166 |
| 801 | .937 | 168 |
| 804.5 | .9335 | 170 |
| 808 | .929 | 173 |
| 811.5 | .9248 | 175 |
| 815 | .9205 | 178 |
| 818.5 | .9163 | 181 |
| 822 | .9121 | 184 |
| 825.5 | .9079 | 186 |
| 829 | .9036 | 189 |
| 832.5 | .8994 | 192 |
| 836 | .8952 | 194 |
| 839.5 | .8909 | 197 |
| 843 | .8867 | 200 |
| 846.5 | .8825 | 202 |
| 850 | .8782 | 205 |
| 853.5 | .874 | 208 |
| 857 | .866 | 213 |
| 860.5 | .862 | 215 |
| 864 | .8549 | 220 |
| 867.5 | .8478 | 225 |
| 871 | .8407 | 229 |
| 874.5 | .8336 | 234 |
| 878 | .8265 | 238 |
| 881.5 | .8194 | 243 |
| 885 | .8123 | 247 |
| 888.5 | .8052 | 252 |
| 892 | .7981 | 255 |
| 895.5 | .791 | |

## Fig. 3e

Fig. 5

EP 0 416 197 A1

Fig. 6

Europäisches
Patentamt

EUROPÄISCHER
RECHERCHENBERICHT

Nummer der Anmeldung

EP 90 10 4484

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-2 193 327 (MITSUBISHI JIDOSHA KOGYO KABUS-HIKI KAISHA) <br> * Seite 1, Zeilen 61 - 95 * <br> — — — | 1,4,6 | F 02 D 41/14 <br> F 02 D 41/24 <br> G 01 N 27/416 |
| Y | FR-A-2 355 437 (REGIE NATIONALE DES USINES RE-NAULT ET AUTOMOBILES PEUGEOT) <br> * Seite 1, Zeile 32 - Seite 2, Zeile 5; Seite 7, Zeilen 29 - 35 * <br> — — — | 1,4,6 | |
| A | EP-A-0 067 931 (ROBERT BOSCH GMBH.) <br> * Seite 2, Zeilen 12 - 15; Seite 3, Zeile 27 - Seite 4, Zeile 4; Seite 4, Zeilen 21 - 25; Seite 9, Zeilen 13 - 29; Seite 11, Zeilen 18 - 29; Figur 4 * <br> — — — | 1,2,4,6 | |
| A | EP-A-0 123 064 (ROBERT BOSCH GMBH.) <br> * Seite 9, Zeile 18 - Seite 10, Zeile 12 * <br> — — — | 1 | |
| A | EP-A-0 305 998 (JAPAN ELECTRONICS CONTROL SY-STEMS CO.,LTD.) <br> * Seite 3, Spalte 4, Zeilen 10 - 17; Seite 9, Spalte 16, Zeilen 43 - 47; Figur 13 * <br> — — — | 1 | RECHERCHIERTE SACHGEBIETE (Int. Cl.5) |
| A | FR-A-2 570 127 (WESTFALISCHE METALL INDUSTRIE KG & CO.) <br> * Seite 5, Zeile 13 - Seite 6, Zeile 4; Figur 3 * <br> — — — — — | 1 | F 02 D <br> G 01 N |

Der vorliegende Recherchenbericht wurde für alle Patentansprüche erstellt

| Recherchenort | Abschlußdatum der Recherche | Prüfer |
|---|---|---|
| Den Haag | 08 Mai 90 | MOUALED R. |